(19) Europäisches Patentamt
European Patent Office
Office européen des brevets

(11) **EP 4 641 742 A1**

(12) **EUROPEAN PATENT APPLICATION**
published in accordance with Art. 153(4) EPC

(43) Date of publication:
**29.10.2025 Bulletin 2025/44**

(21) Application number: **24795540.4**

(22) Date of filing: **08.02.2024**

(51) International Patent Classification (IPC):
**H01M 10/058** (2010.01)

(52) Cooperative Patent Classification (CPC):
Y02E 60/10

(86) International application number:
**PCT/CN2024/076845**

(87) International publication number:
**WO 2024/222152 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 CN 202310477745**

(71) Applicant: **Contemporary Amperex Technology Co., Limited**
**Ningde, Fujian 352100 (CN)**

(72) Inventors:
• **XU, Xiaofu**
**Ningde, Fujian 352100 (CN)**
• **YE, Yonghuang**
**Ningde, Fujian 352100 (CN)**
• **SHANG, Yibo**
**Ningde, Fujian 352100 (CN)**
• **HE, Jianfu**
**Ningde, Fujian 352100 (CN)**
• **LUO, Chenxu**
**Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **BATTERY AND ELECTRIC APPARATUS**

(57) The present application provides a battery and an electric apparatus. The battery comprises a cell, a cell shell wrapping the cell and an electrolyte. The cell comprises a cathode piece, the cathode piece comprises a cathode current collector and a cathode film layer arranged on at least one surface of the cathode current collector, and the cathode film layer comprises a cathode active material.

The battery satisfies the following:

$$\alpha \times \rho_{EL}/(PD \times C_{cathode}) + V \times h/C_{cell} \leq m_{EL}.$$

FIG. 1

**Description**

The present application claims priority to Chinese Patent Application No. 202310477745.6 filed on April 28, 2023, the content of which is incorporated herein by reference in its entirety.

TECHNICAL FIELD

The present application relates to the technical field of secondary batteries, and in particular, to a battery and an electric device.

BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, military equipment, and aerospace. As secondary batteries have achieved great development, higher requirements have been placed on their cycle performance, capacity performance, power capability, and the like.

SUMMARY

The present application is made in view of the above issues, and its objective is to provide a battery and an electric device. The overall power capability of the battery of the present application is enhanced, and the cycle performance and capacity performance are improved.

To achieve the above objective, a first aspect of the present application provides a battery, including a cell, a cell casing encapsulating the cell, and an electrolytic solution, where the cell includes a positive electrode plate, the positive electrode plate includes a positive electrode current collector and a positive electrode film layer disposed on at least one surface of the positive electrode current collector, and the positive electrode film layer includes a positive electrode active material; and the battery satisfies:

$$\alpha \times \rho_{EL}/(PD \times C_{cathode}) + V \times h/C_{cell} \leq m_{EL},$$

where $\alpha$ represents a porosity of the positive electrode plate; $\rho_{EL}$ represents a density of the electrolytic solution, expressed in g/cm$^3$; PD represents a compaction density of the positive electrode plate at a pressure of 20-80 tons, expressed in g/cm$^3$; $C_{cathode}$ represents a specific capacity of the positive electrode active material, expressed in mAh/g; V represents a volume of the cell casing, expressed in cm$^3$; h represents a ratio of a thickness of the cell to a thickness of the cell casing; $C_{cell}$ represents a capacity of the battery, expressed in Ah; and $m_{EL}$ represents a minimum electrolyte injection coefficient of the cell.

Therefore, the battery of the present application satisfies the above conditions, such that the wettability of the electrolytic solution against the positive electrode plate is improved, the transport path of active ions is shortened, and the overall power capability of the battery is enhanced; meanwhile, the conductivity of active ions at the interface of the positive electrode plate is enhanced, and the cycle performance and capacity performance of the battery are improved.

In any embodiment, the battery has at least two voltage plateaus;

optionally, the battery has at least one voltage plateau of $\leq$ 3.5 V;

optionally, the battery has at most one voltage plateau of $\leq$ 3.4 V.

Therefore, the power capability of the battery at low SOC is enhanced, and the overall power capability of the battery is enhanced.

In any embodiment, a ratio of a discharge capacity at $\leq$ 3.5 V of the battery to a total discharge capacity is 2%-50%, optionally 5%-30%.

Therefore, the power capability of the battery at low SOC is improved, the overall power capability of the battery is enhanced, and/or the cycle performance of the battery is improved.

In any embodiment, the positive electrode film layer further includes a lithium supplement agent;

optionally, the lithium supplement agent includes one or more of $Li_3N$, a $Li_2S/Co$ composite material, a LiF/Co

composite material, a $Li_2O/Co$ composite material, $Li_2O_2$, $Li_2NiO_2$, $Li_5FeO_4$, $Li_2C_2O_4$, $Li_2C_4O_4$, $Li_2C_3O_5$, and $Li_2C_4O_6$;

optionally, the mass content of the lithium supplement agent in the positive electrode film layer is 1%-40%.

Therefore, the present application, by using the lithium supplement agent to form insitu pores, improves the wettability of the electrolytic solution, shortens the transport path of active ions, enhances the overall power capability of the battery, and/or improves the cycle performance of the battery.

In any embodiment, the positive electrode active material includes a first positive electrode active material; the first positive electrode active material includes a compound $LiNi_bCo_dMn_eM_fO_2$, where M includes one or more elements of Al, Mg, Ca, Na, Ti, W, Zr, Sr, Cr, Zn, Ba, B, S, and Y, and optionally includes an Mg element and/or an Al element; b is 0.314-0.970; d is 0-0.320, optionally 0.047-0.320; e is 0.006-0.390; and the sum of b, d, e, and f is 1, and f is greater than 0.

In any embodiment, a mass content of the first positive electrode active material in the positive electrode active material is 20%-98%. Therefore, the overall power capability of the battery is enhanced, and/or the cycle performance of the battery is improved.

In any embodiment, the positive electrode active material further includes a second positive electrode active material; the second positive electrode active material includes a compound $Li_aA_xMn_{1-y}B_yP_{1-z}C_zO_{4-n}D_n$, where A includes one or more elements of Zn, Al, Na, K, Mg, Nb, Mo, and W; B includes one or more elements of Ti, V, Zr, Fe, Ni, Mg, Co, Ga, Sn, Sb, Nb, and Ge; C includes one or more elements of B (boron), S, Si, and N; D includes one or more elements of S, F, Cl, and Br; a is 0.9-1.1; x is 0-0.1; y is 0.001-0.6; z is 0.001-0.1; and n is 0-0.1.

In any embodiment, the second positive electrode active material includes a core and a shell encapsulating the core; the core includes the compound $Li_aA_xMn_{1-y}B_yP_{1-z}C_zO_{4-n}D_n$, and the shell includes a carbon element.

In any embodiment, the second positive electrode active material includes a core and a shell encapsulating the core; the shell includes a first coating layer covering the core, a second coating layer covering the first coating layer, and a third coating layer covering the second coating layer, where the core includes the compound $Li_aA_xMn_{1-y}B_yP_{1-z}C_zO_{4-n}D_n$, the first coating layer includes crystalline pyrophosphate $Li_gEP_2O_7$ and/or $E_h(P_2O_7)_i$, the second coating layer includes crystalline phosphate $X_jPO_4$, and the third coating layer includes a carbon element;

E in the crystalline pyrophosphate $Li_gEP_2O_7$ and $E_h(P_2O_7)_i$ each independently includes one or more elements of Fe, Ni, Mg, Co, Cu, Zn, Ti, Ag, Zr, Nb, and Al; X includes one or more elements of Li, Fe, Ni, Mg, Co, Cu, Zn, Ti, Ag, Zr, Nb, and Al; g is greater than 0 and less than or equal to 2; h is greater than 0 and less than or equal to 4; i is greater than 0 and less than or equal to 3; and j is greater than 0 and less than or equal to 3.

In any embodiment, the positive electrode active material is composed of the first positive electrode active material and the second positive electrode active material.

Therefore, the overall power capability of the battery is enhanced, and the power capability of the battery at low SOC is improved.

In any embodiment, a mass content of polycrystalline particles in the positive electrode active material is 0%-100%;

optionally, a primary particle size of the polycrystalline particle is 20 nm-1000 nm.

Therefore, the transport path of active ions is shortened, and the power capability of the battery is further enhanced.

A second aspect of the present application further provides an electric device, including the battery according to the first aspect of the present application.

BRIEF DESCRIPTION OF THE DRAWINGS

FIG. 1 is a schematic diagram of a secondary battery according to one embodiment of the present application.

FIG. 2 is an exploded view of the secondary battery according to one embodiment of the present application shown in FIG. 1.

FIG. 3 is a schematic diagram of a battery module according to one embodiment of the present application.

FIG. 4 is a schematic diagram of a battery pack according to one embodiment of the present application.

FIG. 5 is an exploded view of the battery pack according to one embodiment of the present application shown in FIG. 4.

FIG. 6 is a schematic diagram of an electric device using a secondary battery as a power source according to one embodiment of the present application.

Description of the reference numerals:

1: battery pack; 2: upper case body; 3: lower case body; 4: battery module; 5: secondary battery; 51: housing; 52: electrode assembly; 53: top cover assembly.

DETAILED DESCRIPTION

Hereinafter, embodiments of the secondary battery, the battery module, the battery pack, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, the term "single crystal/single-crystal-like particle" in the present application refers to a single particle (i.e., a primary particle).

Unless otherwise specified, the terms "secondary particle" and "polycrystalline material particle" in the present application generally have similar meanings, referring to a particle formed by agglomeration of more than 100 primary particles with an average particle size in the range of 50-800 nm.

[Secondary Battery]

Secondary batteries, also known as rechargeable batteries or storage batteries, refer to batteries that can continue to be used by reactivating their active materials through charging after discharging.

Typically, a secondary battery includes a positive electrode plate, a negative electrode plate, a separator, and an electrolytic solution. During the charging and discharging process of the battery, active ions (such as lithium ions) are intercalated and deintercalated back and forth between the positive electrode plate and the negative electrode plate. The separator is disposed between the positive electrode plate and the negative electrode plate to primarily prevent the positive and negative electrodes from short-circuiting, while allowing the passage of active ions. The electrolytic solution is between the positive electrode plate and the negative electrode plate, and primarily functions to conduct active ions.

One embodiment of the present application provides a battery, including a cell, a cell casing encapsulating the cell, and an electrolytic solution, where the cell includes a positive electrode plate, the positive electrode plate includes a positive electrode current collector and a positive electrode film layer disposed on at least one surface of the positive electrode current collector, and the positive electrode film layer includes a positive electrode active material; and the battery satisfies:

$$\alpha \times \rho_{EL}/(PD \times C_{cathode}) + V \times h/C_{cell} \leq m_{EL},$$

where $\alpha$ represents a porosity of the positive electrode plate; $\rho_{EL}$ represents a density of the electrolytic solution, expressed in $g/cm^3$; PD represents a compaction density of the positive electrode plate at a pressure of 20-80 tons, expressed in $g/cm^3$; $C_{cathode}$ represents a specific capacity of the positive electrode active material, expressed in mAh/g; V represents a volume of the cell casing, expressed in $cm^3$; h represents a ratio of a thickness of the cell to a thickness of the cell casing; $C_{cell}$ represents a capacity of the battery, expressed in Ah; and $m_{EL}$ represents a minimum electrolyte injection coefficient of the cell.

Although the mechanism remains unclear, the applicant has unexpectedly discovered that: by enabling the battery to satisfy the above conditions in the present application, the wettability of the electrolytic solution against the positive electrode plate is improved, the transport path of active ions is shortened, and the overall power capability of the battery is enhanced; meanwhile, the conductivity of active ions at the interface of the positive electrode plate is enhanced, and the cycle performance and capacity performance of the battery are improved.

In some embodiments, the porosity $\alpha$ of the positive electrode plate is measured using conventional methods in the art. For example, with reference to the method of GB/T 24586-2009, the positive electrode plate is immersed in ethyl methyl carbonate (EMC) for cleaning, and the true volume V0 and the apparent volume V are determined using a gas replacement method via a porosity analyzer under ambient temperature and relative humidity (RH) of $\leq 2\%$. The porosity $\alpha$ of the positive electrode plate is calculated according to the following formula:

$$\alpha = 100\% \times ((V - V0))/V.$$

In some embodiments, the density $\rho_{EL}$ of the electrolytic solution is measured using conventional methods in the art. For example, the density $\rho_{EL}$ of the electrolytic solution is measured according to the "Test Method B-U-shaped oscillating tube method" in the standard GB/T 2013-2010.

In some embodiments, the compaction density PD of the positive electrode plate at a pressure of 20-80 tons is measured using conventional methods in the art. For example, the positive electrode plate is placed in a special compaction mold, and the mold is then placed on a compaction density instrument. A pressure of 20-80 tons is applied, and after pressure release, the areal density of the positive electrode plate is measured using a high-precision balance, while the thickness of the positive electrode plate is measured using a micrometer caliper. The compaction density PD of the positive electrode plate is calculated according to the following formula:

$$PD = \text{areal density of the positive electrode plate}//$$
$$\text{thickness of the positive electrode plate}.$$

In some embodiments, the specific capacity $C_{cathode}$ of the positive electrode active material is measured using conventional methods in the art. For example, a positive electrode plate and a counter electrode lithium foil are fabricated into a button battery. The button battery is charged at a constant current of 0.1C to the target voltage under a constant temperature environment of 25 °C and then discharged at a constant current of 0.1C to the cut-off voltage to obtain the discharge capacity of the battery. The specific capacity $C_{cathode}$ of the positive electrode active material is calculated by dividing the discharge capacity of the battery by the mass of the positive electrode active material in the positive electrode plate.

In some embodiments, the volume V of the cell casing is measured using conventional methods in the art. For example, a micrometer caliper is used to measure the length, width, and height of the cell casing, and the volume is calculated as the product of the length, width, and height.

In some embodiments, the ratio h of the thickness of the cell to the thickness of the cell casing is measured using conventional methods in the art. For example, a micrometer caliper is used to measure the thickness of a single cell and the thickness of the cell casing, and then the ratio h of the thickness of the cell to the thickness of the cell casing is calculated.

In some embodiments, the capacity $C_{cell}$ of the battery is tested using conventional methods in the art. For example, under a constant temperature environment of 25 °C, the battery is left to stand for 10 min and discharged to the cut-off voltage at 0.33C; then, the battery is left to stand for 10 min and charged to the target voltage at a constant current of 0.33C, and then charged at a constant voltage until the current is ≤ 0.05C; subsequently, the battery is left to stand for 10 min and discharged to the cut-off voltage at 0.33C, at which time the discharge capacity is recorded as C0. The battery is left to stand for 10 min and charged to the target voltage at a constant current of 0.33C0; then, the battery is charged at a constant voltage until the current is ≤ 0.05C0; subsequently, the battery is left to stand for 10 min and discharged to the cut-off voltage at 0.33C0, at which time the discharge capacity is recorded as the capacity $C_{cell}$ of the battery.

In some embodiments, the minimum electrolyte injection coefficient $m_{EL}$ of the cell is tested using conventional methods in the art. For example, capacity tests are performed on cells with a series of gradient electrolyte injection coefficients, using the same method as that of the $C_{cell}$ test described above. Each cell is tested multiple times in parallel, with the highest value and the lowest value being excluded, and the average value of the remaining values is taken as the cell capacity. A segmented line graph is plotted with the electrolyte injection coefficient as the X-axis and the cell capacity as the Y-axis, where the X-axis value corresponding to the inflection point on the graph is defined as the minimum electrolyte injection coefficient $m_{EL}$ of the cell.

In some embodiments, the battery has at least two voltage plateaus, for example, 2, 3, 4, 5, 6, 7, 8, 9, 10, or in a range defined by any of the numerical values described above;

optionally, the battery has at least one voltage plateau of ≤ 3.5 V, for example, 1, 2, 3, 4, 5, 6, or in a range defined by any of the numerical values described above;

optionally, the battery has at most one voltage plateau of ≤ 3.4 V, for example, 0 or 1.

Therefore, the power capability of the battery at low SOC is enhanced, and the overall power capability of the battery is enhanced.

In some embodiments, the number of voltage plateaus is determined using conventional methods in the art. For example, the test method is as follows: Under a constant temperature environment of 25 °C, the battery is left to stand for 10 min and discharged to the cut-off voltage at 0.33C; then, the battery is left to stand for 10 min and charged to the target voltage at a constant current of 0.33C, and then charged at a constant voltage until the current is ≤ 0.05C; subsequently, the battery is left to stand for 10 min and discharged to the cut-off voltage at 0.33C, at which time the discharge capacity is recorded as C0. The battery is left to stand for 10 min and charged to the target voltage at a constant current of 0.33C0, and then charged at a constant voltage until the current is ≤ 0.05C0; subsequently, the battery is left to stand for 10 min and discharged to the cut-off voltage at 0.33C0, at which time the discharge capacity is recorded as 100%SOC. A SOC-OCV curve is generated by plotting the discharge capacity against voltage. The first derivative of the SOC-OCV curve yields a dQ/dV curve. The number of peaks appearing on the dQ/dV curve corresponds to the number of voltage plateaus of the battery. The number of peaks appearing within the voltage range of ≤ 3.5 V defines the number of voltage plateaus of ≤ 3.5 V of the battery, and the number of peaks appearing within the voltage range of ≤ 3.4 V defines the number of voltage plateaus of ≤ 3.4 V of the battery.

In some embodiments, the ratio of the discharge capacity at ≤ 3.5 V of the battery to the total discharge capacity is 2%-50%, optionally 5%-30%, e.g., 2%, 5%, 10%, 15%, 20%, 25%, 30%, 35%, 40%, 45%, 50%, or a range defined by any of the numerical values described above.

Therefore, the power capability of the battery at low SOC is improved, the overall power capability of the battery is enhanced, and/or the cycle performance of the battery is improved.

In some embodiments, the ratio of the discharge capacity at ≤ 3.5 V of the battery to the total discharge capacity is tested using conventional methods in the art. For example, the test method is as follows: On the SOC-OCV curve, the discharge capacity corresponding to the voltage of 3.5 V is Q1, the full discharge voltage corresponds to the total discharge capacity Q2, and the ratio C of the discharge capacity at ≤ 3.5 V of the battery to the total discharge capacity is calculated according to the following formula:

$$C\,(\%)\;=\;100\,\times\,(Q2\,-\,Q1)/Q2.$$

In some embodiments, the positive electrode film layer further includes a lithium supplement agent;

optionally, the lithium supplement agent includes one or more of $Li_3N$, a $Li_2S$/Co composite material, a LiF/Co composite material, a $Li_2O$/Co composite material, $Li_2O_2$, $Li_2NiO_2$, $Li_5FeO_4$, $Li_2C_2O_4$, $Li_2C_4O_4$, $Li_2C_3O_5$, and $Li_2C_4O_6$;

optionally, the mass content of the lithium supplement agent in the positive electrode film layer is 1%-40%, e.g., 1%, 5%, 10%, 15%, 20%, 25%, 30%, 35%, 40%, or in a range defined by any of the numerical values described above.

Therefore, the present application, by using the lithium supplement agent to form insitu pores, improves the wettability of the electrolytic solution, shortens the transport path of active ions, enhances the overall power capability of the battery, and/or improves the cycle performance of the battery.

The $Li_2S/Co$ composite material, the $LiF/Co$ composite material, and the $Li_2O/Co$ composite material are all conventional composite materials in the art, and the element ratio, compound ratio, and preparation method thereof are well known to those skilled in the art. The preparation method of the above composite materials includes, but is not limited to, a melting method.

In some embodiments, the positive electrode active material includes a first positive electrode active material; the first positive electrode active material includes a compound $LiNi_bCo_dMn_eM_fO_2$, where M includes one or more elements of Al, Mg, Ca, Na, Ti, W, Zr, Sr, Cr, Zn, Ba, B, S, and Y, and optionally includes an Mg element and/or an Al element; b is 0.314-0.970, e.g., 0.314, 0.35, 0.4, 0.45, 0.5, 0.55, 0.6, 0.65, 0.7, 0.8, 0.9, 0.97, or in a range defined by any of the numerical values described above; d is 0-0.320, optionally 0.047-0.320, e.g., 0, 0.05, 0.1, 0.15, 0.2, 0.25, 0.3, 0.32, or in a range defined by any of the numerical values described above; e is 0.006-0.390, e.g., 0.01, 0.05, 0.1, 0.12, 0.15, 0.18, 0.2, 0.25, 0.3, 0.35, 0.39, or in a range defined by any of the numerical values described above; and the sum of b, d, e, and f is 1, and f is greater than 0.

In some embodiments, the mass content of the first positive electrode active material in the positive electrode active material is 20%-98%, e.g., 20%, 25%, 30%, 35%, 40%, 45%, 50%, 60%, 70%, 80%, 85%, 90%, 95%, 98%, or in a range defined by any of the numerical values described above. Therefore, the overall power capability of the battery is enhanced, and/or the cycle performance of the battery is improved.

In some embodiments, the positive electrode active material further includes a second positive electrode active material; the second positive electrode active material includes a compound $Li_aA_xMn_{1-y}B_yP_{1-z}C_zO_{4-n}D_n$, where A includes one or more elements of Zn, Al, Na, K, Mg, Nb, Mo, and W; B includes one or more elements of Ti, V, Zr, Fe, Ni, Mg, Co, Ga, Sn, Sb, Nb, and Ge; C includes one or more elements of B (boron), S, Si, and N; D includes one or more elements of S, F, Cl, and Br; a is 0.9-1.1, e.g., 0.9, 0.95, 1, 1.05, 1.1, or in a range defined by any of the numerical values described above; x is 0-0.1, e.g., 0, 0.02, 0.05, 0.07, 0.1, or in a range defined by any of the numerical values described above; y is 0.001-0.6, e.g., 0.005, 0.01, 0.015, 0.02, 0.025, 0.03, 0.04, 0.05, 0.1, 0.2, 0.3, 0.4, 0.5, 0.6, or in a range defined by any of the numerical values described above; z is 0.001-0.1, e.g., 0.001, 0.005, 0.01, 0.03, 0.05, 0.07, 0.1, or in a range defined by any of the numerical values described above; and n is 0-0.1, e.g., 0, 0.001, 0.003, 0.005, 0.01, 0.03, 0.05, 0.07, 0.1, or in a range defined by any of the numerical values described above.

In some embodiments, the second positive electrode active material includes a core and a shell encapsulating the core; the core includes the compound $Li_aA_xMn_{1-y}B_yP_{1-z}C_zO_{4-n}D_n$, and the shell includes a carbon element.

In some embodiments, the second positive electrode active material includes a core and a shell encapsulating the core; the shell includes a first coating layer covering the core, a second coating layer covering the first coating layer, and a third coating layer covering the second coating layer, where the core includes the compound $Li_aA_xMn_{1-y}B_yP_{1-z}C_zO_{4-n}D_n$, the first coating layer includes crystalline pyrophosphate $Li_gEP_2O_7$ and/or $E_h(P_2O_7)_i$, the second coating layer includes crystalline phosphate $X_jPO_4$, and the third coating layer includes a carbon element.

E in the crystalline pyrophosphate $Li_gEP_2O_7$ and $E_h(P_2O_7)_i$ each independently includes one or more elements of Fe, Ni, Mg, Co, Cu, Zn, Ti, Ag, Zr, Nb, and Al; X includes one or more elements of Li, Fe, Ni, Mg, Co, Cu, Zn, Ti, Ag, Zr, Nb, and Al; g is greater than 0 and less than or equal to 2, e.g., 0.5, 1, 1.5, 2, or in a range defined by any of the numerical values described above; h is greater than 0 and less than or equal to 4, e.g., 0.5, 1, 1.4, 2, 2.5, 3, 3.6, 4, or in a range defined by any of the numerical values described above; i is greater than 0 and less than or equal to 3, e.g., 0.5, 1, 1.4, 2, 2.5, 3, or in a range defined by any of the numerical values described above; and j is greater than 0 and less than or equal to 3, e.g., 0.5, 1, 1.4, 2, 2.5, 3, or in a range defined by any of the numerical values described above.

In some embodiments, the positive electrode active material is composed of the first positive electrode active material and the second positive electrode active material.

Therefore, the overall power capability of the battery is enhanced, and the power capability of the battery at low SOC is improved.

In some embodiments, the mass content of polycrystalline particles in the positive electrode active material is 0%-100%;

optionally, the primary particle size of the polycrystalline particle is 20 nm-1000 nm.

Therefore, the transport path of active ions is shortened, and the power capability of the battery is further enhanced.

In some embodiments, the primary particle size of the polycrystalline particle is measured using conventional methods in the art. For example, the measurement method is as follows: The positive electrode active material is tested using a scanning electron microscope; a sample and the magnification are adjusted, such that the field of view contains more than 10 agglomerated particles; the number of primary particles composing each agglomerated particle is counted, and the size of the primary particle in the length direction is measured using a scale and recorded as the particle size; the particle sizes of the primary particles in each agglomerated particle are sorted from large to small; and 1/10 of the maximum particle size data and 1/10 of the minimum particle size data are excluded, and the average of the remaining particle size data is taken as the average particle size of the primary particles in the agglomerated particle. If the number and average particle size of the primary particles in more than 50% (including 50%) of the agglomerated particles meet the definition of "polycrystalline material particle", the positive electrode active material is determined to be a polycrystalline material, and the average particle size of the primary particles of the polycrystalline material is recorded as the particle size of the primary particles.

In some embodiments, the content of the polycrystalline particles in the positive electrode active material is tested using conventional methods in the art. For example, the test method is as follows: The positive electrode active material is tested using scanning electron microscopy (SEM) and energy-dispersive X-ray spectroscopy (EDS); the element type of the polycrystalline material is determined based on the EDS element test results, and the element difference between the polycrystalline particles and the single crystal particles is determined in conjunction with the particle morphology acquired by SEM. The element type and proportion are acquired through an ICP test for the positive electrode active material, and thus the content of polycrystalline particles in the positive electrode active material is calculated.

In the present application, $LiNi_bCo_dMn_eM_fO_2$, $Li_aA_xMn_{1-y}B_yP_{1-z}C_zO_{4-n}D_n$, $Li_gEP_2O_7$, $E_h(P_2O_7)_i$, and $X_jPO_4$ all maintain electrical neutrality.

Unless otherwise stated, in the above chemical formula, when M represents two or more elements, the above limitation on the numerical range of f is not only a limitation on the stoichiometric number of each element as M, but also a limitation on the sum of the stoichiometric numbers of all elements as M. For example, when M represents two or more elements M1, M2, ..., Mn, the stoichiometric numbers f1, f2, ..., fn of corresponding M1, M2, ..., Mn must individually fall within the numerical range defined for f in the present application, and the sum of f1, f2, ..., fn must also fall within the numerical range. Similarly, in the case that A, B, C, D, E, and X each represents two or more elements, the limitation on the numerical range of the stoichiometric numbers thereof in the present application also has the meaning described above.

The preparation method for the second positive electrode active material of the present application includes the following steps:

a step of providing a core material: The core material includes $Li_aA_xMn_{1-y}B_yP_{1-z}C_zO_{4-n}D_n$, where A includes one or more elements of Zn, Al, Na, K, Mg, Nb, Mo, and W; B includes one or more elements of Ti, V, Zr, Fe, Ni, Mg, Co, Ga, Sn, Sb, Nb, and Ge; C includes one or more elements of B (boron), S, Si, and N; D includes one or more elements of S, F, Cl, and Br; a is 0.9-1.1; x is 0-0.1; y is 0.001-0.6; z is 0.001-0.1; and n is 0-0.1;

a first coating step: providing a first mixture including $Li_gEP_2O_7$ and/or $E_h(P_2O_7)_i$; mixing the core material and the first mixture, followed by drying and sintering to obtain a material coated with the first coating layer, where E in the crystalline pyrophosphate $Li_gEP_2O_7$ and $E_h(P_2O_7)_i$ each independently includes one or more elements of Fe, Ni, Mg, Co, Cu, Zn, Ti, Ag, Zr, Nb, and Al, g is greater than 0 and less than or equal to 2, and h is greater than 0 and less than or equal to 4; and i is greater than 0 and less than or equal to 3;

a second coating step: providing a second mixture including crystalline phosphate $X_jPO_4$; mixing the material coated with the first coating layer and the second mixture, followed by drying and sintering to obtain a material coated with two coating layers, where X includes one or more elements of Li, Fe, Ni, Mg, Co, Cu, Zn, Ti, Ag, Zr, Nb, and Al; and j is greater than 0 and less than or equal to 3; and

a third coating step: providing a third mixture including a carbon source; mixing the material coated with two coating layers and the third mixture, followed by drying and sintering to obtain the second positive electrode active material.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, other positive electrode active materials known in the art may be used to replace the second positive electrode active material, which, as an example, include, but are not limited to, lithium iron phosphate (abbreviated as LFP), lithium manganese iron phosphate (abbreviated as LMFP), lithium vanadium phosphate (abbreviated as LVP), and the like.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, a graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

[Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

[Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is liquid and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. As an example, the additive may include a negative electrode film-forming additive, a positive electrode film-forming additive, and may also include an additive capable of improving certain performance of the battery, such as an additive for improving the overcharge performance of the battery, an additive for improving the high- or low-temperature performance of the battery, or the like.

[Separator]

In some embodiments, the secondary battery further includes a separator. The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

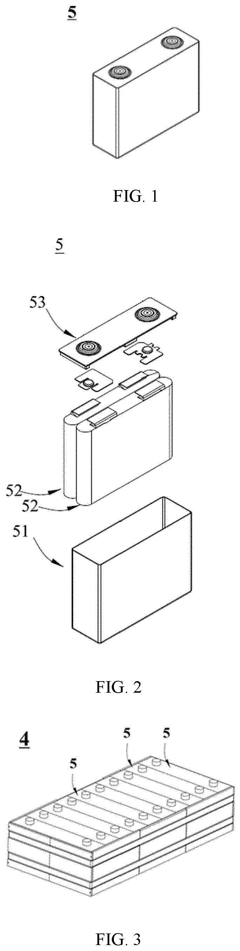

The present application does not particularly limit the shape of the secondary battery, and it may have a cylindrical shape, a prismatic shape, or any other shape. For example, FIG. 1 shows a secondary battery 5 having a prismatic structure as one example.

In some embodiments, referring to FIG. 2, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

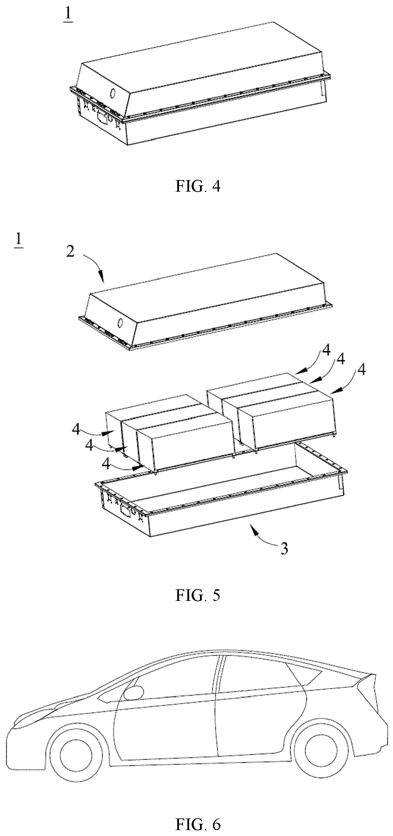

FIG. 4 and FIG. 5 show a battery pack 1 as one example. Referring to FIG. 4 and FIG. 5, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the secondary battery, the battery module, or the battery pack according to the present application. The secondary battery, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its usage requirements.

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

[Examples]

Hereinafter, examples of the present application are described. The examples described below are illustrative and are merely used to explain the present application, and they should not be construed as limiting the present application. The embodiments without techniques or conditions specified therein are implemented according to techniques or conditions described in the literature in the art or according to product instructions. Reagents or instruments used herein without specified manufacturers are all commercially available conventional products.

**Example 1**

(I) Preparation of positive electrode plate:

(1) Preparation of first positive electrode active material:

1) $NiSO_4$, $CoSO_4$, and $MnSO_4$ were dissolved in water in a molar ratio of 0.55:0.235:0.155 to prepare a mixed solution, where the concentration of $NiSO_4$ in the mixed solution was 2 mol/L. A 5 mol/L NaOH solution was separately prepared;

2) 50 L of mixed solution was introduced into a reaction kettle, followed by feeding 50 L of NaOH solution and an appropriate amount of 0.5 mol/L ammonia solution into the reaction kettle. The pH value in the reaction kettle was 9.0-12.0, and the reaction proceeded at a temperature of 40 °C-80 °C for 60 h under stirring at 300-1000 r/min. After completion of the reaction, the precipitate was filtered and washed, and the washed precipitate was dried at 120 °C under vacuum for 24 h to obtain a precursor;

3) $Li_2CO_3$, the precursor, $Al_2O_3$, and MgO were mixed, where the molar ratio of $Li_2CO_3$ (calculated based on the molar weight of the element Li), the precursor (calculated based on the total molar weight of Ni, Co, and Mn in the mixed solution), $Al_2O_3$ (calculated based on the molar weight of the element Al), and MgO was 1.05:0.94:0.04:0.02. The mixture was placed into a ball mill tank and milled at 300 r/s for 2 h. Then, the mixture was transferred to a box furnace and pre-sintered at 950 °C for 12 h under an air atmosphere of 0.2 MPa, with a heating rate of 1 °C/min, followed by cooling to 600 °C at a rate of 1 °C/min and sintering at this temperature for 8 h. After sintering, the temperature was reduced to 300 °C at a rate of 1 °C/min, followed by natural cooling to room temperature. The mixture was then jet-milled using a jet mill at a speed of 3000 r/min and an air flow rate of 500 m$^3$/h for 0.5 h, and sieved through a 500-mesh sieve to obtain the first positive electrode active material $LiNi_{0.55}Co_{0.235}Mn_{0.155}Al_{0.04}Mg_{0.02}O_2$.

(2) Preparation of positive electrode plate:

The first positive electrode active material, the binder polyvinylidene fluoride (PVDF), and the conductive agent acetylene black were dissolved in the solvent N-methylpyrrolidone (NMP) in a mass ratio of 96:2:2, and the mixture was thoroughly stirred and well mixed to obtain a positive electrode slurry. The surface of the positive electrode current collector was uniformly coated with the positive electrode slurry, followed by drying, cold pressing, and cutting to obtain the positive electrode plated.

(II) Preparation of negative electrode plate:

The negative electrode active material artificial graphite, the conductive agent acetylene black, the binder styrene-butadiene rubber (SBR), and the thickener sodium carboxymethylcellulose (CMC-Na) were dissolved in deionized water in a mass ratio of 96:2: 1: 1, and the mixture was thoroughly stirred and well mixed to obtain a negative electrode slurry. The negative electrode current collector copper foil was coated with the negative electrode slurry, followed by drying, cold pressing, and cutting to obtain the negative electrode plate.

(III) Separator: A polypropylene film was used.

(IV) Preparation of electrolytic solution:

Ethylene carbonate (EC), ethyl methyl carbonate (EMC), and diethyl carbonate (DEC) were mixed in a volume ratio of 1:1:1, and then $LiPF_6$ was uniformly dissolved in the above solution to obtain the electrolytic solution. The concentration of $LiPF_6$ in the electrolytic solution was 1 mol/L.

(V) Preparation of secondary battery:

The above positive electrode plate, the separator, and the negative electrode plate were stacked and wound in sequence to obtain a cell. The cell was placed into a cell casing, and then put into an outer packaging, and the electrolytic solution prepared above was added. Subsequently, processes such as packaging, standing, formation, and aging were performed to obtain the secondary battery.

The secondary batteries of Examples 2-17 and the Comparative Example were prepared using a method similar to that of Example 1, and the different product parameters are detailed in Tables 1-2.

The mass contents of the binder and the conductive agent in the positive electrode film layer were the same as those in Example 1.

**Preparation method for second positive electrode active material of Examples 8-14**

**Step S1: preparation of manganese oxalate co-doped with Fe, Co, V, and S**

689.6 g of manganese carbonate, 455.3 g of ferrous carbonate, 4.7 g of cobalt sulfate, and 4.9 g of vanadium(II) chloride were added to a mixer and thoroughly mixed for 6 h. The obtained mixture was then transferred into a reaction kettle, and 5 L of deionized water and 1260.6 g of oxalic acid dihydrate were added. The resulting mixture was heated to 80 °C, thoroughly stirred at a rotation speed of 500 rpm for 6 h, and well mixed until the reaction was terminated and no bubbles were generated to obtain a manganese oxalate suspension co-doped with Fe, Co, and V. Then, the suspension was filtered, dried at 120 °C, and sand-milled to obtain manganese oxalate particles with a particle size of 100 nm.

**Step S2: preparation of core**

1793.1 g of manganese oxalate prepared, 368.3 g of lithium carbonate, 1146.6 g of ammonium dihydrogen phosphate, and 4.9 g of dilute sulfuric acid were added into 20 L of deionized water. The mixture was thoroughly stirred and well mixed for reaction at 80 °C for 10 h to obtain a slurry. The slurry was transferred to a spray dryer for spray drying and granulation, and dried at a temperature of 250 °C to obtain a powder. The powder was sintered in a roller kiln at 700 °C for 4 h under a protective atmosphere (90% nitrogen and 10% hydrogen) to obtain a core material. The element content of the core material was detected by inductively coupled plasma (ICP) optical emission spectroscopy to obtain a core $Li_{0.997}Mn_{0.60}Fe_{0.393}V_{0.004}Co_{0.003}P_{0.997}S_{0.003}O_4$.

**Step S3: preparation of first coating layer suspension**

Preparation of $Li_2FeP_2O_7$ solution: 7.4 g of lithium carbonate, 11.6 g of ferrous carbonate, 23.0 g of ammonium dihydrogen phosphate, and 12.6 g of oxalic acid dihydrate were dissolved in 500 mL of deionized water. The pH was controlled to 5, and the mixture was stirred and reacted at room temperature for 2 h to obtain a solution. Then, the solution was heated to 80 °C and maintained at this temperature for 4 h to obtain a first coating layer suspension.

**Step S4: coating of first coating layer**

The 1571.9 g of doped lithium manganese phosphate core material obtained in Step S2 was added into the first coating layer suspension (containing 15.7 g of coating substance) obtained in Step S3. The mixture was thoroughly stirred and mixed for 6 h. After uniform mixing, the mixture was transferred into an oven and dried at 120 °C for 6 h, followed by sintering at 650 °C for 6 h to obtain a pyrophosphate-coated material.

**Step S5: preparation of second coating layer suspension**

3.7 g of lithium carbonate, 11.6 g of ferrous carbonate, 11.5 g of ammonium dihydrogen phosphate, and 12.6 g of oxalic acid dihydrate were dissolved in 1500 mL of deionized water, and the mixture was stirred and reacted for 6 h to obtain a solution. Then, the solution was heated to 120 °C and maintained at this temperature for 6 h to obtain a second coating layer suspension.

**Step S6: coating of second coating layer**

The 1586.8 g of pyrophosphate-coated material obtained in Step S4 was added into the second coating layer suspension (containing 47.1 g of coating substance) obtained in Step S5. The mixture was thoroughly stirred and mixed for 6 h. After uniform mixing, the mixture was transferred into an oven and dried at 120 °C for 6 h, followed by sintering at 700 °C for 8 h to obtain a material coated with two coating layers.

**Step S7: preparation of aqueous solution of third coating layer**

37.3 g of sucrose was dissolved in 500 g of deionized water. The mixture was then stirred for thorough dissolution to obtain a sucrose aqueous solution.

**Step S8: coating of third coating layer**

The 1633.9 g of the material coated with two coating layers obtained in Step S6 was added into the sucrose solution obtained in Step S7. The mixture was stirred and mixed for 6 h. After uniform mixing, the mixture was transferred into an oven and dried at 150 °C for 6 h, followed by sintering at 700 °C for 10 h to obtain a material coated with three coating layers.

**Preparation method for second positive electrode active material of Examples 15-17**

**Step S1: preparation of manganese oxalate particles**

459.7 g of manganese carbonate, 686.9 g of ferrous carbonate, 4.8 g of vanadium(II) chloride, and 3.6 g of nickel carbonate were added to a mixer and thoroughly mixed for 6 h. The obtained mixture was then transferred into a reaction kettle, and 5 L of deionized water and 1260.6 g of oxalic acid dihydrate were added. The resulting mixture was heated to 80 °C, thoroughly stirred at a rotation speed of 500 rpm for 6 h, and well mixed until the reaction was terminated and no bubbles were generated to obtain a manganese oxalate suspension co-doped with Fe, Co, and V. Then, the suspension was filtered, dried at 120 °C, and sand-milled to obtain manganese oxalate particles with a particle size of 100 nm.

**Step S2: preparation of core**

1794.9 g of manganese oxalate prepared, 369.8 g of lithium carbonate, 1148.9 g of ammonium dihydrogen phosphate, and 0.8 g of silicic acid were added into 20 L of deionized water. The mixture was thoroughly stirred and well mixed for reaction at 80 °C for 10 h to obtain a slurry. The slurry was transferred to a spray dryer for spray drying and granulation, and dried at a temperature of 250 °C to obtain a powder. The powder was sintered in a roller kiln at 700 °C for 4 h under a protective atmosphere (90% nitrogen and 10% hydrogen) to obtain a core material. The element content of the core material was detected by inductively coupled plasma (ICP) optical emission spectroscopy to obtain the core.

**Step S3: preparation of first coating layer suspension**

Preparation of $Li_2FeP_2O_7$ solution: 7.4 g of lithium carbonate, 11.6 g of ferrous carbonate, 23.0 g of ammonium dihydrogen phosphate, and 12.6 g of oxalic acid dihydrate were dissolved in 500 mL of deionized water. The pH was controlled to 5, and the mixture was stirred and reacted at room temperature for 2 h to obtain a solution. Then, the solution was heated to 80 °C and maintained at this temperature for 4 h to obtain a first coating layer suspension.

**Step S4: coating of first coating layer**

The 1573.9 g of doped core material obtained in Step S2 was added into the first coating layer suspension (containing 31.4 g of coating substance) obtained in Step S3. The mixture was thoroughly stirred and mixed for 6 h. After uniform mixing, the mixture was transferred into an oven and dried at 120 °C for 6 h, followed by sintering at 650 °C for 6 h to obtain a pyrophosphate-coated material.

**Step S5: preparation of second coating layer suspension**

3.7 g of lithium carbonate, 15.5 g of cobalt sulfate, 11.5 g of ammonium dihydrogen phosphate, and 12.6 g of oxalic acid dihydrate were dissolved in 1500 mL of deionized water, and the mixture was stirred and reacted for 6 h to obtain a solution. Then, the solution was heated to 120 °C and maintained at this temperature for 6 h to obtain a second coating layer suspension.

**Step S6: coating of second coating layer**

The 1605.4 g of pyrophosphate-coated material obtained in Step S4 was added into the second coating layer suspension (containing 63.0 g of coating substance) obtained in Step S5. The mixture was thoroughly stirred and mixed for 6 h. After uniform mixing, the mixture was transferred into an oven and dried at 120 °C for 6 h, followed by sintering at 750 °C for 8 h to obtain a material coated with two coating layers.

**Step S7: preparation of aqueous solution of third coating layer**

37.4 g of sucrose was dissolved in 500 g of deionized water. The mixture was then stirred for thorough dissolution to obtain a sucrose aqueous solution.

**Step S8: coating of third coating layer**

The 1668.3 g of the material coated with two coating layers obtained in Step S6 was added into the sucrose solution obtained in Step S7. The mixture was stirred and mixed for 6 h. After uniform mixing, the mixture was transferred into an oven and dried at 80 °C for 6 h, followed by sintering at 600 °C for 6 h to obtain a material coated with three coating layers.

Table 1: Parameter results of Examples 1-17 and Comparative Example

| | First positive electrode active material | | Second positive electrode active material | | | |
|---|---|---|---|---|---|---|
| | Chemical formula | Mass content in positive electrode active material | Chemical formula | First coating layer | Second coating layer | Third coating layer |
| Example 1 | $LiNi_{0.55}Co_{0.235}Mn_{0.155}Al_{0.04}Mg_{0.02}O_2$ | 100% | \ | \ | \ | \ |
| Example 2 | $LiNi_{0.55}Co_{0.235}Mn_{0.155}Al_{0.04}Mg_{0.02}O_2$ | 100% | \ | \ | \ | \ |
| Example 3 | $LiNi_{0.55}Co_{0.235}Mn_{0.155}Al_{0.04}Mg_{0.02}O_2$ | 100% | \ | \ | \ | \ |
| Example 4 | $LiNi_{0.55}Co_{0.235}Mn_{0.155}Al_{0.04}Mg_{0.02}O_2$ | 100% | \ | \ | \ | \ |
| Example 5 | $LiNi_{0.55}Co_{0.235}Mn_{0.155}Al_{0.04}Mg_{0.02}O_2$ | 100% | \ | \ | \ | \ |
| Example 6 | $LiNi_{0.55}Co_{0.235}Mn_{0.155}Al_{0.04}Mg_{0.02}O_2$ | 100% | \ | \ | \ | \ |
| Example 7 | $LiNi_{0.55}Co_{0.235}Mn_{0.155}Al_{0.04}Mg_{0.02}O_2$ | 100% | \ | \ | \ | \ |
| Example 8 | $LiNi_{0.55}Co_{0.235}Mn_{0.155}Al_{0.04}Mg_{0.02}O_2$ | 98% | $Li_{0.997}Mn_{0.60}Fe_{0.393}V_{0.004}Co_{0.003}P_{0.997}S_{0.003}O_4$ | 1% crystalline $Li_2Fe$-$P_2O_7$ | 3% crystalline $LiFePO_4$ | 5% carbon |
| Example 9 | $LiNi_{0.55}Co_{0.235}Mn_{0.155}Al_{0.04}Mg_{0.02}O_2$ | 95% | $Li_{0.997}Mn_{0.60}Fe_{0.393}V_{0.004}Co_{0.003}P_{0.997}S_{0.003}O_4$ | 1% crystalline $Li_2Fe$-$P_2O_7$ | 3% crystalline $LiFePO_4$ | 5% carbon |
| Example 10 | $LiNi_{0.55}Co_{0.235}Mn_{0.155}Al_{0.04}Mg_{0.02}O_2$ | 90% | $Li_{0.997}Mn_{0.60}Fe_{0.393}V_{0.004}Co_{0.003}P_{0.997}S_{0.003}O_4$ | 1% crystalline $Li_2Fe$-$P_2O_7$ | 3% crystalline $LiFePO_4$ | 5% carbon |
| Example 11 | $LiNi_{0.55}Co_{0.235}Mn_{0.155}Al_{0.04}Mg_{0.02}O_2$ | 80% | $Li_{0.997}Mn_{0.60}Fe_{0.393}V_{0.004}Co_{0.003}P_{0.997}S_{0.003}O_4$ | 1% crystalline $Li_2Fe$-$P_2O_7$ | 3% crystalline $LiFePO_4$ | 5% carbon |
| Example 12 | $LiNi_{0.55}Co_{0.235}Mn_{0.155}Al_{0.04}Mg_{0.02}O_2$ | 50% | $Li_{0.997}Mn_{0.60}Fe_{0.393}V_{0.004}Co_{0.003}P_{0.997}S_{0.003}O_4$ | 1% crystalline $Li_2Fe$-$P_2O_7$ | 3% crystalline $LiFePO_4$ | 5% carbon |
| Example 13 | $LiNi_{0.55}Co_{0.235}Mn_{0.155}Al_{0.04}Mg_{0.02}O_2$ | 20% | $Li_{0.997}Mn_{0.60}Fe_{0.393}V_{0.004}Co_{0.003}P_{0.997}S_{0.003}O_4$ | 1% crystalline $Li_2Fe$-$P_2O_7$ | 3% crystalline $LiFePO_4$ | 5% carbon |
| Example 14 | $LiNi_{0.55}Co_{0.235}Mn_{0.155}Al_{0.04}Mg_{0.02}O_2$ | 15% | $Li_{0.997}Mn_{0.60}Fe_{0.393}V_{0.004}Co_{0.003}P_{0.997}S_{0.003}O_4$ | 1% crystalline $Li_2Fe$-$P_2O_7$ | 3% crystalline $LiFePO_4$ | 5% carbon |

(continued)

| | First positive electrode active material | | Second positive electrode active material | | | |
|---|---|---|---|---|---|---|
| | Chemical formula | Mass content in positive electrode active material | Chemical formula | First coating layer | Second coating layer | Third coating layer |
| Example 15 | $LiNi_{0.55}Co_{0.235}Mn_{0.155}Al_{0.04}Mg_{0.02}O_2$ | 50% | $Li_{1.001}Mn_{0.40}Fe_{0.593}V_{0.004}Ni_{0.003}P_{0.999}Si_{0.001}O_4$ | 2% crystalline $Li_2Fe-P_2O_7$ | 4% crystalline Li-CoPO$_4$ | 1% carbon |
| Example 16 | $LiNi_{0.55}Co_{0.235}Mn_{0.155}Al_{0.04}Mg_{0.02}O_2$ | 40% | $Li_{1.001}Mn_{0.40}Fe_{0.593}V_{0.004}Ni_{0.003}P_{0.999}Si_{0.001}O_4$ | 2% crystalline $Li_2Fe-P_2O_7$ | 4% crystalline Li-CoPO$_4$ | 1% carbon |
| Example 17 | $LiNi_{0.55}Co_{0.235}Mn_{0.155}Al_{0.04}Mg_{0.02}O_2$ | 20% | $Li_{1.001}Mn_{0.40}Fe_{0.593}V_{0.004}Ni_{0.003}P_{0.999}Si_{0.001}O_4$ | 2% crystalline $Li_2Fe-P_2O_7$ | 4% crystalline Li-CoPO$_4$ | 1% carbon |
| Comparative Example | $LiNi_{0.55}Co_{0.235}Mn_{0.155}Al_{0.04}Mg_{0.02}O_2$ | 100% | \ | \ | \ | \ |
| The percentage content of the first coating layer, the second coating layer, and the third coating layer are calculated based on the mass of the core. | | | | | | |

Table 2: Parameter results of Examples 1-17 and Comparative Example

| | $\alpha$ | $\rho$EL (g/cm$^3$) | PD (g/cm$^3$) | Ccathode (mAh/g) | V (cm$^3$) | h | $\alpha*\rho$EL/(P.D. *Ccathode)+ V*h/Ccell | mEL | Lithium supplement agent | | Number of voltage plateau | Number of voltage plateau of $\leq 3.4$ V | Number of voltage plateau of $\leq 3.5$V | Ratio of discharge capacity of $\leq 3.5$ V to total discharge capacity |
| | | | | | | | | | Substance | Mass content in the positive electrode film layer | | | | |
|---|---|---|---|---|---|---|---|---|---|---|---|---|---|---|
| Example 1 | 26% | 1.2 | 3.5 | 187 | 421 | 91% | 1.23 | 1.73 | \ | 0% | 2 | 0 | 1 | 2.0% |
| Example 2 | 28% | 1.2 | 3.5 | 187 | 425 | 91% | 1.28 | 1.78 | $Li_2C_2O_4$ | 1% | 2 | 0 | 1 | 2.0% |
| Example 3 | 33% | 1.2 | 3.5 | 187 | 443 | 91% | 1.40 | 1.93 | $Li_2C_2O_4$ | 5% | 2 | 0 | 1 | 2.0% |
| Example 4 | 42% | 1.2 | 3.5 | 187 | 468 | 91% | 1.61 | 2.16 | $Li_2C_2O_4$ | 10% | 2 | 0 | 1 | 2.0% |
| Example 5 | 52% | 1.2 | 3.5 | 187 | 526 | 91% | 1.90 | 2.50 | $Li_2C_2O_4$ | 20% | 2 | 0 | 1 | 2.0% |
| Example 6 | 68% | 1.2 | 3.5 | 187 | 702 | 91% | 2.51 | 3.21 | $Li_2C_2O_4$ | 40% | 2 | 0 | 1 | 2.0% |
| Example 7 | 72% | 1.2 | 3.5 | 187 | 766 | 91% | 2.70 | 3.42 | $Li_2C_2O_4$ | 45% | 2 | 0 | 1 | 2.0% |
| Example 8 | 42% | 1.2 | 3.4 | 186 | 470 | 91% | 1.63 | 2.18 | $Li_2C_2O_4$ | 10% | 3 | 1 | 1 | 3% |
| Example 9 | 42% | 1.2 | 3.4 | 184 | 473 | 91% | 1.65 | 2.20 | $Li_2C_2O_4$ | 10% | 3 | 1 | 1 | 4% |
| Example 10 | 42% | 1.2 | 3.4 | 182 | 479 | 91% | 1.69 | 2.24 | $Li_2C_2O_4$ | 10% | 3 | 1 | 1 | 6% |
| Example 11 | 42% | 1.2 | 3.4 | 177 | 491 | 91% | 1.76 | 2.31 | $Li_2C_2O_4$ | 10% | 3 | 1 | 1 | 10% |
| Example 12 | 42% | 1.2 | 3.4 | 161 | 531 | 91% | 2.05 | 2.60 | $Li_2C_2O_4$ | 10% | 3 | 1 | 1 | 22% |
| Example 13 | 42% | 1.2 | 3.4 | 145 | 580 | 91% | 2.45 | 3.00 | $Li_2C_2O_4$ | 10% | 3 | 1 | 1 | 34% |
| Example 14 | 42% | 1.2 | 3.4 | 143 | 589 | 91% | 2.53 | 3.08 | $Li_2C_2O_4$ | 10% | 3 | 1 | 1 | 36% |
| Example 15 | 42% | 1.2 | 3.4 | 161 | 531 | 91% | 2.05 | 2.60 | $Li_2C_2O_4$ | 10% | 3 | 1 | 1 | 32% |
| Example 16 | 42% | 1.2 | 3.4 | 156 | 546 | 91% | 2.17 | 2.72 | $Li_2C_2O_4$ | 10% | 3 | 1 | 1 | 38% |
| Example 17 | 42% | 1.2 | 3.4 | 145 | 580 | 91% | 2.45 | 3.00 | $Li_2C_2O_4$ | 10% | 3 | 1 | 1 | 50% |
| Comparative example | 42% | 1.2 | 3.5 | 187 | 468 | 91% | 1.61 | 1.00 | $Li_2C_2O_4$ | 10% | 2 | 0 | 1 | 2.0% |

**Test Example**

(1) Test for porosity of positive electrode plate:

With reference to the method of GB/T 24586-2009, the positive electrode plate was immersed in ethyl methyl carbonate (EMC) for cleaning, and the true volume V0 and the apparent volume V were determined using a gas replacement method via a porosity analyzer (Model: AccuPyc II 1340) under ambient temperature and relative humidity (RH) of $\leq 2\%$. The porosity $\alpha$ of the positive electrode plate was calculated according to the following formula:

$$\alpha = 100\% \times ((V - V0))/V.$$

(2) Test for compaction density of positive electrode plate:

The positive electrode plate was placed in a special compaction mold, and the mold was then placed on a compaction density instrument. A pressure of 30 tons was applied, and after pressure release, the areal density of the positive electrode plate was measured using a high-precision balance, while the thickness of the positive electrode plate was measured using a micrometer caliper (with 10 measurement points collected and the average value calculated). The compaction density PD of the positive electrode plate was calculated according to the following formula:

$$PD = \text{areal density of the positive electrode plate}//$$
$$\text{thickness of the positive electrode plate}.$$

(3) Test for specific capacity of positive electrode active material:

The positive electrode plate and the counter electrode lithium foil were fabricated into a button battery. The button battery was charged at a constant current of 0.1C to 4.3 V under a constant temperature environment of 25 °C and then discharged at a constant current of 0.1C to 2.8 V to obtain the discharge capacity of the battery. The specific capacity $C_{cathode}$ of the positive electrode active material was calculated by dividing the discharge capacity of the battery by the mass of the positive electrode active material in the positive electrode plate.

(4) Test for density of electrolytic solution:

The density $\rho_{EL}$ of the electrolytic solution was measured according to the "Test Method B-U-shaped oscillating tube method" in the standard GB/T 2013-2010. Before testing, the electrolytic solution was equilibrated to room temperature, and a densitometer was rinsed three times with the electrolytic solution.

(5) Test for volume of cell casing:

Under a constant temperature environment of 25 °C, the cell casing had a rectangular parallelepiped structure. The length, width, and height of the cell casing were measured using a micrometer caliper. The volume V of the cell casing was calculated as the product of the length, width, and height.

(6) Test for ratio of cell thickness to cell casing thickness:

Under a constant temperature environment of 25 °C, a micrometer caliper was used to measure the thickness of a single cell (i.e., the thickness of the cell in the stacking direction of the positive electrode plate, the separator, and the negative electrode plate) and the thickness of the cell casing (i.e., the thickness of the cell casing in the stacking direction of the positive electrode plate, the separator, and the negative electrode plate). The ratio h of the thickness of the cell to the thickness of the cell casing was then calculated.

(7) Test for battery capacity:

Under a constant temperature environment of 25 °C, the battery was left to stand for 10 min and discharged to 2.8 V at 0.33C; then, the battery was left to stand for 10 min and charged to 4.3 V at a constant current of 0.33C, and then charged at a constant voltage until the current was $\leq 0.05C$; subsequently, the battery was left to stand for 10 min and discharged to 2.8 V at 0.33C, at which time the discharge capacity was recorded as C0. The battery was left to stand for 10 min and charged to 4.3 V at a constant current of 0.33C0; then, the battery was charged at a constant voltage until the current was $\leq 0.05$C0; subsequently, the battery was left to stand for 10 min and discharged to 2.8 V at 0.33C0, at which time the discharge capacity was recorded as the capacity $C_{cell}$ of the battery.

(8) Test for minimum electrolyte injection coefficient of cell:

Capacity tests were performed on cells with electrolyte injection coefficients of 1, 1.5, 2, 2.5, 3, 3.5, 4, 4.5, and 5, using the same method as that of item (7) above. Each cell was tested 5 times in parallel, with the highest value and the lowest value being excluded, and the average value of the remaining 3 numerical values was taken as the cell capacity.

A segmented line graph was plotted with the electrolyte injection coefficient as the X-axis and the cell capacity as the Y-axis, where the X-axis value corresponding to the inflection point on the graph was defined as the minimum electrolyte injection coefficient $m_{EL}$ of the cell.

(9) Tests for voltage plateau of battery and corresponding state of charge (SOC) thereof:

Under a constant temperature environment of 25 °C, the battery was left to stand for 10 min and discharged to 2.8 V at 0.33C; then, the battery was left to stand for 10 min and charged to 4.3 V at a constant current of 0.33C, and then charged at a constant voltage until the current was $\leq 0.05$C; subsequently, the battery was left to stand for 10 min and discharged to 2.8 V at 0.33C, at which time the discharge capacity was recorded as C0. The battery was left to stand for 10 min and charged to 4.3 V at a constant current of 0.33C0, and then charged at a constant voltage until the current was $\leq 0.05$C0; subsequently, the battery was left to stand for 10 min and discharged to 2.8 V at 0.33C0, at which time the discharge capacity was recorded as 100%SOC. A SOC-OCV curve was generated by plotting the discharge capacity against voltage. The first derivative of the SOC-OCV curve yielded a dQ/dV curve. The number of peaks appearing on the dQ/dV curve corresponded to the number of voltage plateaus of the battery. The number of peaks appearing within the voltage range of $\leq 3.5$ V defined the number of voltage plateaus of $\leq 3.5$ V of the battery, and the number of peaks appearing within the voltage range of $\leq 3.4$ V defined the number of voltage plateaus of $\leq 3.4$ V of the battery.

On the SOC-OCV curve, the discharge capacity corresponding to the voltage of 3.5 V was Q1, the full discharge voltage 2.8 V corresponded to the total discharge capacity Q2, and the ratio C of the discharge capacity at $\leq 3.5$ V of the battery to the total discharge capacity was calculated according to the following formula:

$$C\,(\%) \;=\; 100 \,\times\, (Q2 - Q1)/Q2$$

(10) Tests for content of polycrystalline particles and primary particle size in positive electrode active material:

The positive electrode active material was tested using a scanning electron microscope. A sample and the magnification were adjusted, such that the field of view contained more than 10 agglomerated particles; the number of primary particles composing each agglomerated particle was counted, and the size of the primary particle in the length direction was measured using a scale and recorded as the particle size; the particle sizes of the primary particles in each agglomerated particle were sorted from large to small; and 1/10 of the maximum particle size data and 1/10 of the minimum particle size data were excluded, and the average of the remaining particle size data was taken as the average particle size of the primary particles in the agglomerated particle. If the number and average particle size of the primary particles in more than 50% (including 50%) of the agglomerated particles met the definition of "polycrystalline material particle", the positive electrode active material was determined to be a polycrystalline material; otherwise, it was determined to be a single crystal or single-crystal-like material. The average particle size of the primary particles of the polycrystalline material was recorded as the particle size of the primary particles.

Content test of polycrystalline particles in positive electrode active material:

The positive electrode active material was tested using scanning electron microscopy (SEM) and energy dispersive X-ray spectroscopy (EDS); the element type of the polycrystalline material was determined based on the EDS element test results, and the element difference between the polycrystalline particles and the single crystal particles was determined in conjunction with the particle morphology acquired by SEM. The element type and proportion were acquired through an ICP test for the positive electrode active material, and thus the content of polycrystalline particles in the positive electrode active material was calculated.

(11) Power test:

Under a constant temperature environment of 25 °C, the battery was left to stand for 10 min and discharged to 2.8 V at 0.33C; then, the battery was left to stand for 10 min and charged to 4.3 V at a constant current of 0.33C, and then charged at a constant voltage until the current was $\leq$ 0.05C; subsequently, the battery was left to stand for 10 min and discharged to 2.8 V at 0.33C, at which time the discharge capacity was recorded as C0. The battery was left to stand for 10 min and discharged to 2.8 V at 0.33C0; then, the battery was left to stand for 10 min and charged to 4.3 V at a constant current of 0.33C0, and then charged at a constant voltage until the current was $\leq$ 0.05C0; subsequently, the battery was left to stand for 10 min and discharged to 80%C0 at 0.33C0; then, the battery was left to stand for 120 min and discharged for 30 s at a current of 2C0, at which time the voltage was recorded as V1. The battery was left to stand for 10 min, and the processes of constant-current charging at 0.33C0, constant-voltage charging, standing, discharging at 0.33C0 to 80%C0, standing, discharging for 30 s at a current of Xi (i = 2, 3, 4, 5, ..., n), and recording voltage Vi (i = 2, 3, 4, 5, ..., n) were repeated until the recorded voltage Vi fell within the range of V0 (2.8 V) $\pm$ 0.05 V. In this case, corresponding Xi was recorded, and the power of the battery was calculated as Xi $\times$ Vi.

In the above processes, it was set that a current of Xi - 1 was used in the previous cycle to obtain a voltage Vi - 1, and a current of Xi was used in the next cycle to obtain a voltage Vi. In this case, if the voltage Vi - 1 obtained in the previous cycle was < V0 - 0.05V, the current Xi used in the next cycle was < Xi - 1; conversely, the current Xi used in the next cycle was > Xi - 1, and the difference value between Xi and Xi - 1 was 0.2C0.

(12) Cycle life test:

Under a constant temperature environment of 25 °C, the battery was left to stand for 10 min and then discharged to 2.8 V at 0.33C. Then, the battery was left to stand for another 10 min and charged to 4.3 V at a constant current of 0.33C, followed by constant voltage charging until the current was $\leq$ 0.05C. After resting for 10 min, the battery was discharged to 2.8 V at 0.33C. The discharge capacity of the first cycle of the battery was recorded as $D_1$. The operation described above was repeated, and the discharge capacity of each cycle was recorded as $D_n$ (n = 2, 3...). The state of health (SOH) of the cell was calculated according to the following formula, and the number of cycles n was recorded when the state of health reached 80% SOH.

$$\text{State of health of cell} = 100\% \times D_n/D_3.$$

The test results are shown in Table 3.

Table 3: Performance test results of Examples 1-17 and Comparative Example

|  | Cell (Ah) | 80% SOH cycle life | Power (Wh) |
|---|---|---|---|
| Example 1 | 60 | 1580 | 840 |
| Example 2 | 60 | 1620 | 848 |
| Example 3 | 60 | 2030 | 882 |
| Example 4 | 60 | 2200 | 924 |
| Example 5 | 60 | 1890 | 880 |
| Example 6 | 60 | 1600 | 853 |
| Example 7 | 60 | 690 | 720 |
| Example 8 | 60 | 2210 | 970 |
| Example 9 | 60 | 2230 | 990 |
| Example 10 | 60 | 2300 | 1016 |
| Example 11 | 60 | 2380 | 1109 |
| Example 12 | 60 | 2230 | 1155 |
| Example 13 | 60 | 2130 | 965 |
| Example 14 | 60 | 1940 | 950 |
| Example 15 | 60 | 2210 | 1120 |
| Example 16 | 60 | 2200 | 1059 |

(continued)

|  | Cell (Ah) | 80% SOH cycle life | Power (Wh) |
|---|---|---|---|
| Example 17 | 60 | 2080 | 930 |
| Comparative example | 37 | 30 | 84 |

From Table 3, it can be seen that:

Compared to the battery of the Comparative Example, the battery of the present application exhibits higher power capability, longer cycle life, and better capacity performance;

Compared to the batteries of Examples 1-8, 13-14, and 17, the power capability of the batteries of Examples 10-12 of the present application is further enhanced, and the cycle life is further improved; compared to the battery of Example 9 of the present application, the power capability of the batteries of the present application 10-12 is further enhanced; compared to the batteries of Examples 15-16 of the present application, the cycle life of the batteries of the present application 10-12 is further improved;

Compared to Examples 1 and 7, the power capability of the batteries of Examples 2-6 and 8-17 of the present application is further enhanced, and the cycle life is further prolonged;

Compared to Examples 1-7 and 14, the power capability of the batteries of Examples 8-12 and 15 of the present application is further enhanced, the cycle life is further prolonged, and the power capability of the batteries of Examples 13 and 16 of the present application is further enhanced.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A battery, comprising a cell, a cell casing encapsulating the cell, and an electrolytic solution, wherein the cell comprises a positive electrode plate, the positive electrode plate comprises a positive electrode current collector and a positive electrode film layer disposed on at least one surface of the positive electrode current collector, and the positive electrode film layer comprises a positive electrode active material; and

the battery satisfies:

$$\alpha \times \rho_{EL}/(PD \times C_{cathode}) + V \times h/C_{cell} \leq m_{EL},$$

wherein $\alpha$ represents a porosity of the positive electrode plate; $\rho_{EL}$ represents a density of the electrolytic solution, expressed in $g/cm^3$; PD represents a compaction density of the positive electrode plate at a pressure of 20-80 tons, expressed in $g/cm^3$; $C_{cathode}$ represents a specific capacity of the positive electrode active material, expressed in mAh/g; V represents a volume of the cell casing, expressed in $cm^3$; h represents a ratio of a thickness of the cell to a thickness of the cell casing; $C_{cell}$ represents a capacity of the battery, expressed in Ah; and $m_{EL}$ represents a minimum electrolyte injection coefficient of the cell.

2. The battery according to claim 1, wherein the battery has at least two voltage plateaus;

optionally, the battery has at least one voltage plateau of $\leq 3.5$ V;
optionally, the battery has at most one voltage plateau of $\leq 3.4$ V.

3. The battery according to claim 1 or 2, wherein a ratio of a discharge capacity at $\leq 3.5$ V of the battery to a total discharge capacity is 2%-50%, optionally 5%-30%.

4. The battery according to any one of claims 1 to 3, wherein the positive electrode film layer further comprises a lithium supplement agent;

   optionally, the lithium supplement agent comprises one or more of $Li_3N$, a $Li_2S/Co$ composite material, a $LiF/Co$ composite material, a $Li_2O/Co$ composite material, $Li_2O_2$, $Li_2NiO_2$, $Li_5FeO_4$, $Li_2C_2O_4$, $Li_2C_4O_4$, $Li_2C_3O_5$, and $Li_2C_4O_6$;
   optionally, a mass content of the lithium supplement agent in the positive electrode film layer is 1%-40%.

5. The battery according to any one of claims 1 to 4, wherein the positive electrode active material comprises a first positive electrode active material; the first positive electrode active material comprises a compound $LiNi_bCo_dMn_eM_fO_2$, wherein M comprises one or more elements of Al, Mg, Ca, Na, Ti, W, Zr, Sr, Cr, Zn, Ba, B, S, and Y, and optionally comprises an Mg element and/or an Al element; b is 0.314-0.970; d is 0-0.320, optionally 0.047-0.320; e is 0.006-0.390; and the sum of b, d, e, and f is 1, and f is greater than 0.

6. The battery according to claim 5, wherein a mass content of the first positive electrode active material in the positive electrode active material is 20%-98%.

7. The battery according to claim 5 or 6, wherein the positive electrode active material further comprises a second positive electrode active material; the second positive electrode active material comprises a compound $Li_aA_xMn_{1-y}B_yP_{1-z}C_zO_{4-n}D_n$, wherein A comprises one or more elements of Zn, Al, Na, K, Mg, Nb, Mo, and W; B comprises one or more elements of Ti, V, Zr, Fe, Ni, Mg, Co, Ga, Sn, Sb, Nb, and Ge; C comprises one or more elements of B (boron), S, Si, and N; D comprises one or more elements of S, F, Cl, and Br; a is 0.9-1.1; x is 0-0.1; y is 0.001-0.6; z is 0.001-0.1; and n is 0-0.1.

8. The battery according to claim 7, wherein the second positive electrode active material comprises a core and a shell encapsulating the core; the core comprises the compound $Li_aA_xMn_{1-y}B_yP_{1-z}C_zO_{4-n}D_n$, and the shell comprises a carbon element.

9. The battery according to claim 7, wherein the second positive electrode active material comprises a core and a shell encapsulating the core; the shell comprises a first coating layer covering the core, a second coating layer covering the first coating layer, and a third coating layer covering the second coating layer; the core comprises the compound $Li_aA_xMn_{1-y}B_yP_{1-z}C_zO_{4-n}D_n$, the first coating layer comprises crystalline pyrophosphate $Li_gEP_2O_7$ and/or $E_h(P_2O_7)_i$, the second coating layer comprises crystalline phosphate $X_jPO_4$, and the third coating layer comprises a carbon element;
   E in the crystalline pyrophosphate $Li_gEP_2O_7$ and $E_h(P_2O_7)_i$ each independently comprises one or more elements of Fe, Ni, Mg, Co, Cu, Zn, Ti, Ag, Zr, Nb, and Al; X comprises one or more elements of Li, Fe, Ni, Mg, Co, Cu, Zn, Ti, Ag, Zr, Nb, and Al; g is greater than 0 and less than or equal to 2; h is greater than 0 and less than or equal to 4; i is greater than 0 and less than or equal to 3; and j is greater than 0 and less than or equal to 3.

10. The battery according to any one of claims 7 to 9, wherein the positive electrode active material is composed of the first positive electrode active material and the second positive electrode active material.

11. The battery according to any one of claims 1 to 10, wherein a mass content of polycrystalline particles in the positive electrode active material is 0%-100%;
    optionally, a primary particle size of the polycrystalline particle is 20 nm-1000 nm.

12. An electric device, comprising the battery according to any one of claims 1 to 11.

5

FIG. 1

5

FIG. 2

4

FIG. 3

FIG. 4

FIG. 5

FIG. 6

## INTERNATIONAL SEARCH REPORT

| International application No. |
|---|
| **PCT/CN2024/076845** |

| A. | CLASSIFICATION OF SUBJECT MATTER |
|---|---|
| | H01M10/058(2010.01)i |

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 正极, 阴极, 孔隙率, 电解液, 密度, 压实密度, 容量, 壳, 体积, 厚度, 注液系数, batter+, cell?, core, cathode, porosity, electrolyte, density, compacted, capacity, shell, volume, thickness, injection, coefficient

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114430039 A (BYD CO., LTD.) 03 May 2022 (2022-05-03) description, paragraphs 15-62 | 1-12 |
| A | CN 114864867 A (SVOLT ENERGY TECHNOLOGY CO., LTD.) 05 August 2022 (2022-08-05) entire document | 1-12 |
| A | CN 114899475 A (HUIZHOU EVE ENERGY CO., LTD.) 12 August 2022 (2022-08-12) entire document | 1-12 |
| A | CN 115394954 A (XIAMEN HITHIUM ENERGY STORAGE TECHNOLOGY CO., LTD.) 25 November 2022 (2022-11-25) entire document | 1-12 |
| A | CN 105787140 A (HUIZHOU TCL HYPERPOWER BATTERIES INC. et al.) 20 July 2016 (2016-07-20) entire document | 1-12 |
| A | US 2015270545 A1 (WASHINGTON UNIVERSITY) 24 September 2015 (2015-09-24) entire document | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 April 2024** | **30 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076845**

| Patent document cited in search report | | | Publication date (day/month/year) | Patent family member(s) | | | Publication date (day/month/year) |
|---|---|---|---|---|---|---|---|
| CN | 114430039 | A | 03 May 2022 | CN | 114430039 | B | 08 August 2023 |
| CN | 114864867 | A | 05 August 2022 | None | | | |
| CN | 114899475 | A | 12 August 2022 | None | | | |
| CN | 115394954 | A | 25 November 2022 | None | | | |
| CN | 105787140 | A | 20 July 2016 | None | | | |
| US | 2015270545 | A1 | 24 September 2015 | US | 10290869 | B2 | 14 May 2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310477745